# EUROPEAN PATENT APPLICATION

(11) **EP 1 923 939 A2**
(43) Date of publication of application: **21.05.2008**
(21) Application number: 07120574.4
(22) Date of filing: 13.11.2007
(51) Int. Cl.: H01M 4/86, H01M 4/88, H01M 4/90, H01M 4/92, H01M 8/10, H01M 8/06, B01J 21/00, B01J 23/00

(54) **Fuel oxidizing catalyst, method for preparing the same, and reformer and fuel cell system including the same**

(30) Priority: 15.11.2006 KR 20060112806; 22.02.2007 KR 20070017863
(71) Applicant: Samsung SDI Co., Ltd., Suwon-si, Gyeonggi-do (KR)
(72) Inventor: Gorobinskiy, Leonid, Yeongton-gu Gyeonggi-do (KR); Kim, Ju-Yong, Yeongton-gu Gyeonggi-do (KR); Nam, Kie Hyun, Yeongton-gu Gyeonggi-do (KR); Ahn, Jin-Goo, Yeongton-gu Gyeonggi-do (KR); Han, Man-Seok, Yeongton-gu Gyeonggi-do (KR); Lee, Yong-Kul, Yeongton-gu Gyeonggi-do (KR); Lee, Sung-Chul, Yeongton-gu Gyeonggi-do (KR); Lee, Chan-Ho, Yeongton-gu Gyeonggi-do (KR); Kim, Jin-Kwang, Yeongton-gu Gyeonggi-do (KR); Lee, Dong-Uk, Yeongton-gu Gyeonggi-do (KR); Sato, Noboru, Yeongton-gu Gyeonggi-do (KR)
(74) Representative: Killin, Stephen James

(57) **Abstract**

The invention provides a fuel oxidizing catalyst, a method of preparing the same, and a reformer and a fuel cell system including the same. In one aspect, the fuel oxidizing catalyst for a fuel cell includes CeO₂, MO (wherein M is a transition metal), and CuO. In this embodiment, the fuel oxidizing catalyst has a relatively high (or excellent) catalytic activity for a fuel oxidizing catalyst reaction and performs a fuel oxidizing catalyst reaction at a relatively low temperature even though it does not include a noble metal.

## Description

The present invention relates to a fuel oxidizing catalyst, a method of preparing the same, and a reformer and a fuel cell system including the same.

A fuel cell is a power generation system for producing electrical energy using a hydrocarbon-based fuel.

Representative exemplary fuel cells include a polymer electrolyte membrane fuel cell (PEMFC) and a direct oxidation fuel cell (DOFC).

The polymer electrolyte membrane fuel cell (PEMFC) that has been developed has power characteristics that are superior to those of conventional fuel cells, as well as a relatively low operating temperature and relatively fast start and response characteristics. Because of this, the PEMFC can be applied to a wide range of applications such as for portable electrical power sources for automobiles, distributed power sources for houses and public buildings, and small electrical power sources for electronic devices.

A polymer electrolyte membrane fuel cell system is composed of a stack for forming a fuel cell body (hereinafter, referred to as a "stack" for convenience purposes), a reformer that reforms the fuel to generate the hydrogen gas and supplies the hydrogen gas to the stack, and an oxidant supplier for supplying an oxidant gas to the stack. The stack generates electrical energy through an electrochemical reaction of a reformed gas supplied from the reformer and an oxidant gas supplied from the oxidant supplier.

The reformer includes a heating source for generating heat energy through a catalytic oxidizing reaction of the fuel, and a reforming reaction part for generating a reformed gas (or hydrogen-rich gas) from the fuel through a reforming reaction of the fuel by utilizing the heat energy from the heating source. In a conventional reformer, an oxidizing catalyst is required to be preheated to a high temperature since oxidization of a fuel gas by the oxidizing catalyst occurs at a high temperature in the heating source of the reformer.

Therefore, a relatively high heat efficiency and a relatively fast operating start time are needed in a fuel cell system.

The present invention provides a fuel oxidizing catalyst that has a relatively high (or excellent) catalytic activity (or catalyst activity), and that is capable of performing catalytic reactions at a relatively low temperature and a method of preparing the same. The present invention also provides a reformer and a fuel cell system including the fuel oxidizing catalyst that has the relatively high catalytic activity.

In a first aspect, the present invention provides a fuel oxidizing catalyst for a fuel cell that includes CeO₂, MO (wherein M is a transition metal), and CuO.

In one embodiment, M includes a material selected from the group consisting of Ni, Co, Fe, and combinations thereof. In one embodiment, M is Fe.

In one embodiment, the fuel oxidizing catalyst includes the CeO₂ in an amount ranging from about 10 to about 30 parts by weight, the MO in an amount ranging from about 0.1 to about 5 parts by weight, and the CuO in an amount ranging from about 1 to about 10 parts by weight.

In another embodiment, the present invention provides a fuel oxidizing catalyst for a fuel cell that includes ZrO₂, CeO₂, MO (wherein M is a transition metal), and CuO.

In one embodiment, the fuel oxidizing catalyst includes the ZrO₂ in an amount ranging from about 5 to about 20 parts by weight, the CeO₂ in an amount ranging from about 5 to about 20 parts by weight, the MO in an amount ranging from about 0.1 to about 5 parts by weight, and the CuO in an amount ranging from about 1 to about 10 parts by weight.

In another embodiment, the present invention provides a fuel oxidizing catalyst for a fuel cell that includes a platinum-based metal, and a metal oxide including CeO₂, MO (wherein M is a transition metal), and CuO.

In one embodiment, the platinum-based metal comprises a material selected from the group consisting of Pt, Pd, Ru, Rh, and combinations thereof.

In one embodiment, the fuel oxidizing catalyst includes the platinum-based metal in an amount ranging from about 0.1 to about 50 parts by weight, the CeO₂ in an amount ranging from about 10 to about 30 parts by weight, the MO in an amount ranging from about 0.1 to about 2 parts by weight, and the CuO in an amount ranging from about 1 to about 10 parts by weight.

Another embodiment of the present invention provides a fuel oxidizing catalyst for a fuel cell that includes a platinum-based metal, and a metal oxide including ZrO₂, CeO₂, MO (wherein M is a transition metal), and CuO.

In one embodiment, the fuel oxidizing catalyst includes the platinum-based metal in an amount ranging from about 0.1 to about 50 parts by weight, the ZrO₂ in an amount ranging from about 5 to about 20 parts by weight, the CeO₂ in an amount ranging from about 5 to about 20 parts by weight, the MO in an amount ranging from about 0.1 to about 2 parts by weight, and the CuO in an amount ranging from about 1 to about 10 parts by weight.

The metal oxide may be supported on a carriers including a material selected from the group consisting of Al₂O₃, TiO₂, SiO₂, cordierite, and combinations thereof.

In a second aspect, the present invention provides a method of preparing a fuel oxidizing catalyst for a fuel cell. The method includes dissolving a Ce precursor and an M precursor (wherein M is a transition metal) in a Cu-containing solution and heating the resulting solution.

The Ce precursor may include a material selected from the group consisting of cesium nitrate, ammonium cesium nitrate, cesium acetate, cesium chloride, hydrates thereof, and combinations thereof.

The M precursor may include a material selected from the group consisting of M nitrate, M acetate, M chloride, hydrates thereof, and combinations thereof.

The Cu-containing solution may be prepared by dissolving the Cu precursor in a solvent. The Cu precursor may include a material selected from the group consisting of copper nitrate, copper acetate, their hydrates, and combinations thereof. The solvent for dissolving the Cu precursor may include a material selected from the group consisting of water, methanol, ethanol, and combinations thereof.

In one embodiment, the fuel oxidizing catalyst further includes ZrO₂ that is prepared by a method that further includes adding a Zr precursor to the Cu-containing solution.

In one embodiment, the Zr precursor includes a material selected from the group consisting of zirconium nitrate, ammonium zirconium nitrate, zirconium acetate, zirconium chloride, hydrates thereof, and combinations thereof.

The metal oxide supported on a carrier can be prepared by further including a process of adding the carrier to a Cu-containing solution.

The heating can be performed at a temperature ranging from about 100 to about 200°C for a period ranging from about 1 to about 3 hours.

In one embodiment, when the fuel oxidizing catalyst is prepared to further include a platinum-based metal, the metal oxide is added to a solution including a platinum-based metal precursor, and then the resulting solution can be heated.

The platinum-based metal precursor may include a material selected from the group consisting of H₂PtCl₆, Pt(C₅H₇O₂)₂, H₆Cl₂N₂Pt, PtCl₂, PtBr₂, PdCl₂, Pd(C₂H₃O₂)₂, Pd(C₅H₇O₂)₂, RuCl₃, Ru(C₅H₇O₂)₃, (NH₄)₂RuCl₆, (NH₄)₃RhCl₆, [Rh(CH₃COO)₂]₂, Rh(H₂O) (NO₃)₃, hydrates thereof, and combinations thereof. The solution including the platinum-based metal precursor may be prepared by dissolving the platinum-based metal precursor in a solvent. The solvent may include a material selected from the group consisting of water, N,N-dimethylformamide, methanol, and combinations thereof.

The heating can be performed at a temperature ranging from about 100 to about 200°C for a period ranging from about 15 to about 45 minutes.

In a third aspect, the present invention provides a reformer for a fuel cell system including a heating source for generating heat through an oxidizing catalyst reaction of a fuel and an oxidant, and a reforming reaction part for generating hydrogen gas through a reforming catalyst reaction. Herein, the fuel oxidizing catalyst includes a metal oxide including CeO₂, MO (wherein M is a transition metal), and CuO.

The fuel oxidizing catalyst may further include a platinum-based metal.

In a fourth aspect, the present invention provides a fuel cell system including the reformer.

In a fifth aspect, the present invention provides the use of a fuel cell catalyst in accordance with the invention in its first aspect in a reformer or a fuel cell system.

Further embodiments of the present invention in any of it various aspects are as described below or as defined in the sub-claims.

FIGURE 1 is a schematic diagram showing a structure of a fuel cell system according to an embodiment of the present invention.

FIGURE 2 is an exploded perspective schematic view showing a stack structure for a fuel cell system illustrated in FIGURE 1.

FIGURE 3 is a graph showing temperature changes of a heating source including a fuel oxidizing catalyst according to Example 1.

FIGURE 4 is a graph showing temperature changes of a heating source including a fuel oxidizing catalyst according to Example 11.

FIGURE 5 is a graph showing high temperature stability of a fuel oxidizing catalyst according to Example 26 of the present invention.

FIGURE 6 is a graph showing a temperature change inside a heating source including a fuel oxidizing catalyst according to Example 26 of the present invention.

According to the first aspect of the present invention, a fuel oxidizing catalyst includes a metal oxide including CeO₂, MO, and CuO. Here, M is a transition metal (or transition element) that can, for example, includes Ni, Co, Fe, or combinations thereof. In one embodiment, M is Fe.

The metal oxide including CeO₂, MO, and CuO is utilized to store an oxidant. In other words, the metal oxide is utilized to provide a fuel with an oxidant during an oxidizing catalyst reaction. Since the metal oxide abundantly includes an oxidant, it can promote the oxidizing catalyst reaction of a fuel and an oxidant at a low temperature.

By contrast, the oxidizing catalyst reaction of a fuel by a conventional heating source that includes a fuel oxidizing catalyst not including a noble metal starts at about 373°C or more. Accordingly, the fuel oxidizing catalyst should be preheated so that a fuel can undergo an oxidizing catalyst reaction. Thus, a normal power output of a conventional fuel cell system cannot but be delayed for a certain (or predetermined).

According to the first aspect of the present invention, a heating source including a fuel oxidizing catalyst does not include a noble metal but can undergo an oxidizing catalyst reaction for a fuel starting at about 340°C or more, thereby improving heat efficiency of a fuel cell system. In other words, since a fuel can undergo an oxidizing catalyst reaction at a relatively low temperature as aforementioned, it can start the oxidizing catalyst reaction after a very short time when the fuel is supplied.

In one embodiment, the fuel oxidizing catalyst includes CeO₂ in an amount ranging from 10 to 30 parts by weight (or from about 10 to about 30 parts by weight). In another embodiment, the fuel oxidizing catalyst includes CeO₂ in an amount ranging from 15 to 25 parts by weight (or from about 15 to about 25 parts by weight). In one embodiment, when the CeO₂ is included in an amount of less than 10 parts by weight, a diffusion concentration of the oxidant may be too low. By contrast, in another embodiment, when the CeO₂ is included in an amount of more than 30 parts by weight, a fuel oxidizing catalyst may have sharply deteriorated porous structure and thermal stability.

In one embodiment, the fuel oxidizing catalyst includes MO in an amount ranging from 0.1 to 5 parts by weight (or from about 0.1 to about 5 parts by weight). In another embodiment, the fuel oxidizing catalyst includes MO in an amount ranging from 3.5 to 4.5 parts by weight (or from about 3.5 to about 4.5 parts by weight). In one embodiment, when the MO is included in an amount of less than 0.1 parts by weight, it may have little beneficial effect. By contrast, in another embodiment, when the MO is included in an amount of more than 5 parts by weight, it may deteriorate a catalytic activity of the fuel oxidizing catalyst.

In one embodiment, the fuel oxidizing catalyst includes CuO in an amount ranging from 1 to 10 parts by weight (or from about 1 to about 10 parts by weight). In another embodiment, the fuel oxidizing catalyst includes CuO in an amount ranging from 2.5 to 5 parts by weight (or from about 2.5 to about 5 parts by weight). In one embodiment, when the CuO is included in an amount of less than 1 part by weight, the fuel oxidizing catalyst may have low capability for storing oxygen. By contrast, in another embodiment, when the CuO is included in an amount of more than 10 parts by weight, it may deteriorate a catalytic activity of the fuel oxidizing catalyst.

The metal oxide including CeO₂, MO, and CuO may be supported on a carrier selected from the group consisting on Al₂O₃, TiO₂, SiO₂, cordierite, and combinations thereof.

When the metal oxide is supported on the carrier, the fuel oxidizing catalyst may include CeO₂ in an amount ranging from 10 to 30 parts by weight (or from about 10 to about 30 parts by weight), MO in an amount ranging from 0.1 to 5 parts by weight (or from about 0.1 to about 5 parts by weight), CuO in an amount ranging from 1 to 10 parts by weight (or from about 1 to about 10 parts by weight), and a carrier in an amount ranging from 55 to 88.9 parts by weight (or from about 55 to about 88.9 parts by weight). In one embodiment, when the carrier is included in an amount of less than 55 parts by weight, a fuel oxidizing catalyst may have weak mechanical strength and small porosity. By contrast, in another embodiment, when the carrier is included in an amount of more than 88.9 parts by weight, not enough metal oxide is included, thereby deteriorating a catalytic activity of the fuel oxidizing catalyst.

In addition, the metal oxide may be a solid solution compound of CeO₂, MO, and CuO. When the metal oxide is a solid solution compound, the CeO₂, MO, and CuO are uniformly dispersed inside the compound at a molecule level, thereby improving capability for storing an oxidant and better supplying a fuel with the oxidant.

According to another embodiment of the present invention, a fuel oxidizing catalyst includes a metal oxide including ZrO₂, CeO₂, MO, and CuO. Here, M is a transition metal that, for example, can be Ni, Co, Fe, or combinations thereof. In one embodiment, M is Fe.

In addition, the fuel oxidizing catalyst may further include ZrO₂, to thereby further improve high temperature stability of a catalyst. In other words, the ZrO₂, facilitates the active material on the surface of a catalyst to internally permeate into the catalyst even at a high temperature of more than 800°C, thereby preventing (or reducing a chance of) an active site of the catalyst from collapsing.

According to this embodiment of the present invention, a fuel oxidizing catalyst may include ZrO₂ in an amount ranging from 5 to 20 parts by weight (or from about 5 to about 20 parts by weight), CeO₂ in an amount ranging from 5 to 20 parts by weight (or from about 5 to about 20 parts by weight), MO in an amount ranging from 0.1 to 5 parts by weight (or from about 0.1 to about 5 parts by weight), and CuO in an amount ranging from 1 to 10 parts by weight (or from about 1 to about 10 parts by weight).

In one embodiment, when the ZrO₂ is included in an amount of less than 5 parts by weight, it has little effect on improving high temperature stability of a fuel oxidizing catalyst. By contrast, when the ZrO₂ is included in an amount of more than 20 parts by weight, it would deteriorate a catalytic activity of the fuel oxidizing catalyst.

According to another embodiment of the present invention, a fuel oxidizing catalyst for a fuel cell includes a platinum-based metal and a metal oxide including CeO₂, MO, and CuO. Here, M is a transition metal that, for example, can be Ni, Co, and/or Fe. In one embodiment, M is Ni.

The metal oxide including CeO₂, MO, and CuO is utilized to store an oxidant. In other words, when a fuel and an oxidant undergo an oxidizing catalyst reaction, the metal oxide is utilized to supply a platinum-based metal with an oxidant. The fuel is supplied with an oxidant from a platinum-based metal, and is thereby oxidized during the oxidizing catalyst reaction of a fuel and an oxidant. The platinum-based metal is supplied with an oxidant from the metal oxide. The metal oxide abundantly includes an oxidant, thereby promoting the oxidizing catalyst reaction speed of a fuel and an oxidant.

According to this embodiment of the present invention, a heating source including a fuel oxidizing catalyst can undergo an oxidation reaction of a fuel at about 180°C or more, thereby improving thermal efficiency. Since a fuel can undergo an oxidizing catalyst reaction at a relatively low temperature as aforementioned, the oxidizing catalyst reaction of a fuel can start relatively soon after the fuel is supplied.

The platinum-based metal can be coated with the metal oxide. However, the fuel oxidizing catalyst is not limited thereto.

The platinum-based metal can include any suitable material having suitable catalytic activity for the oxidizing catalyst reaction of a fuel and an oxidant. In one embodiment, the platinum-based metal includes a material selected from the group consisting of Pt, Pd, Ru, Rh, and combinations thereof. In one embodiment, the platinum-based metal is Pt.

According to this embodiment of the present invention, a fuel oxidizing catalyst includes MO in an amount ranging from 0.1 to 2 parts by weight (or from about 0.1 to about 2 parts by weight). In another embodiment, the fuel oxidizing catalyst includes MO in an amount ranging from 0.1 to 0.4 parts by weight (or from about 0.1 to about 0.4 parts by weight). In one embodiment, when the MO is included in an amount of less than 0.1 parts by weight, the MO may have little beneficial effect. By contrast, in another embodiment, when the MO is included in an amount of 2 parts by weight or more, the MO may deteriorate catalytic activity.

In one embodiment, the fuel oxidizing catalyst includes CeO₂ in an amount ranging from 10 to 30 parts by weight (or from about 10 to about 30 parts by weight). In another embodiment, the fuel oxidizing catalyst includes CeO₂, in an amount ranging from 15 to 25 parts by weight (or from about 15 to about 25 parts by weight). In one embodiment, when the CeO₂ is included in an amount of less than 10 parts by weight, it may substantially decrease oxygen diffusion concentration. By contrast, in another embodiment, when the CeO₂ is included in an amount of more than 30 parts by weight, it may sharply deteriorate the porosity and thermal stability of the fuel oxidizing catalyst.

In one embodiment, the fuel oxidizing catalyst includes CuO in an amount ranging from 1 to 10 parts by weight (from about 1 to about 10 parts by weight) based on the entire amount of the fuel oxidizing catalyst. In another embodiment, the fuel oxidizing catalyst includes CuO in an amount ranging from 2.5 to 5 parts by weight (or from about 2.5 to about 5 parts by weight). In one embodiment, when CuO is included in an amount of less than 1 part by weight, the fuel oxidizing catalyst may have too low a capability for storing oxygen. By contrast, in another embodiment, when CuO is included in an amount of more than 10 parts by weight, it may deteriorate a catalytic activity of the fuel oxidizing catalyst.

In one embodiment, the fuel oxidizing catalyst includes a platinum-based metal in an amount ranging from 0.1 to 50 parts by weight. That is, in one embodiment, when the platinum-based metal is included in an amount of less than 0.1 parts by weight, the platinum-based metal cannot reduce the temperature for starting the oxidizing catalyst reaction to be below 180°C. By contrast, in another embodiment, when the platinum-based metal is included in an amount of more than 50 parts by weight, the amount of oxide is reduced so much that it does not have enough capacity to store a suitable amount of oxygen, and the price of the catalyst is increased.

According to another embodiment of the present invention, a fuel oxidizing catalyst includes a platinum-based metal, and a metal oxide including ZrO₂, CeO₂, MO, and CuO. Here, M is a transition metal that, for example, can be Ni, Co, Fe, or combinations thereof. In one embodiment, M is Ni.

In this embodiment, the fuel oxidizing catalyst may additionally include ZrO₂ and thereby have further improved high temperature stability. In other words, the ZrO₂ is utilized to facilitate the surface active material of a catalyst to internally permeate the catalyst even at a high temperature of more than 800°C, thereby preventing (or reducing a change of) the active site of the catalyst from collapsing.

According to this embodiment of the present invention, a fuel oxidizing catalyst may include a platinum-based metal in an amount ranging from 0.1 to 50 parts by weight (or from about 0.1 to about 50 parts by weight), ZrO₂ in an amount ranging from 5 to 20 parts by weight (or from about 5 to about 20 parts by weight), CeO₂ in an amount ranging from 5 to 20 parts by weight (or from about 5 to about 20 parts by weight), MO in an amount ranging from 0.1 to 2 parts by weight (or from about 0.1 to about 2 parts by weight), and CuO in an amount ranging from 1 to 10 parts by weight (or from about 1 to about 10 parts by weight).

In one embodiment, when the ZrO₂ is included in an amount of less than 5 parts by weight, it may have little effect on improving high temperature stability of a fuel oxidizing catalyst. In another embodiment, when the ZrO₂ is included in an amount of more than 20 parts by weight, it would deteriorate a catalytic activity of the fuel oxidizing catalyst.

According to the second aspect of the present invention, a fuel oxidizing catalyst can be prepared by dissolving a Ce precursor and an M precursor in a Cu-containing solution and then heating the resulting solution to prepare a metal oxide. Herein, when the metal oxide carrier is supported on a carrier, the carrier can be added to the Cu-containing solution.

In one embodiment, the Ce precursor includes cesium nitrate, ammonium cesium nitrate, cesium acetate, cesium chloride, hydrates thereof, or mixtures thereof. In another embodiment, the Ce precursor includes cesium nitrate, ammonium cesium nitrate, hydrates thereof, or mixtures thereof.

In one embodiment, the M precursor includes M nitrate, M acetate, M chloride, hydrates thereof, or mixtures thereof. In another embodiment of the present invention, the M precursor includes Ni(NO₃)₂, Ni(OCOCH₃)₂, NiCl₂, Fe(NO₃)₃, Co(NO₃)₂, hydrates thereof, or mixtures thereof.

The Cu-containing solution can be prepared by dissolving a Cu precursor in a solvent. The Cu precursor may include copper nitrate, copper acetate, hydrates thereof, or mixtures thereof. The solvent for dissolving Cu precursor may be selected from the group consisting of water, methanol, ethanol, and combinations thereof.

The carrier may include Al₂O₃, TiO₂, SiO₂, cordierite, or combinations thereof. In one embodiment, the carrier is Al₂O₃.

The heating can be performed at a temperature ranging from 100 to 200°C (or from about 100 to about 200°C). In another embodiment of the present invention, the heating is performed at a temperature ranging from 110 to 130°C (or from about 110 to about 130°C). In one embodiment, when the temperature is lower than 100°C, a solvent may not be completely evaporated. In another embodiment, when the temperature is higher than 200°C, the metal oxide may have a damaged porous structure.

In addition, the heating may be performed for a period ranging from 1 to 3 hours (or from about 1 to about 3 hours). In one embodiment, when the heating is performed for less than one hour, a solvent may not be completely evaporated. By contrast, in another embodiment, when heating is performed for more than 3 hours, a metal oxide may already be completely formed prior to the end of this period, thereby wasting cost and time.

The method of preparing a fuel oxidizing catalyst can further include a step of calcinating a metal oxide.

The calcination of a metal oxide may be performed at a temperature ranging from 450 to 550°C (or from about 450 to about 550°C). In one embodiment, when the temperature is lower than 450°C, the calcination may not be complete. By contrast, in another embodiment, when the temperature is higher than 550°C, the metal oxide may have a damaged porous structure.

In addition, the calcination may be performed for a period ranging from 1 to 3 hours (or from about 1 hour to about 3 hours). In one embodiment, when the calcination is performed for less than 1 hour, the calcination may not be complete. By contrast, in another embodiment, when the calcination is performed for more than 3 hours, the calcination may already be completely formed prior to the end of this period, thereby wasting cost and time.

According to the second aspect of the present invention, a fuel oxidizing catalyst for a fuel cell can be prepared by dissolving a Ce precursor, an M precursor (wherein M is a transition element), and a Zr precursor in a solution including Cu and heating the resulting solution.

The Zr precursor may be selected from the group consisting of zirconium nitrate, ammonium zirconium nitrate, zirconium acetate, zirconium chloride, hydrates thereof, and combinations thereof.

According to another embodiment of the present invention, a fuel oxidizing catalyst for a fuel cell can be prepared by adding the metal oxide to a solution including a platinum-based metal precursor and heating the resulting mixture.

The solution including a platinum-based metal precursor can be prepared by dissolving a platinum-based metal precursor in a solvent.

Examples of the platinum-based metal precursor include at least one material selected from the group consisting of H₂PtCl₆, Pt(C₅H₇O₂)₂, H₆Cl₂N₂Pt, PtCl₂, PtBr₂, PdCl₂, Pd(C₂H₃O₂)₂, Pd(C₅H₇O₂)₂, RuCl₃, Ru(C₅H₇O₂)₃, (NH₄)₂RuCl₆, (NH₄)₃RhCl₆, [Rh(CH₃COO)₂]₂, Rh(H₂O)(NO₃)₃, hydrates thereof, and combinations thereof.

The solvent in which the platinum-based metal precursor is dissolved includes at least one material selected from the group consisting of water, N,N-dimethylformamide, methanol, and combinations thereof.

The heating may be performed at a temperature ranging from 100 to 200°C (or from about 100 to about 200°C). In one embodiment, when the temperature is lower than 100°C, a solvent may not be completely evaporated. By contrast, in another embodiment, when the temperature is higher than 200°C, the oxidizing catalyst may have a damaged porous structure.

The heating may be performed for a period ranging from 15 to 45 minutes (or from about 15 to about 45 minutes). In one embodiment, when the heating is performed for less than 15 minutes, a solvent may not be completely evaporated. By contrast, in another embodiment, when the heating is performed for more than 45 minutes, the solvent may already be fully evaporated prior to the end of this period, thereby wasting cost and time.

According to another embodiment of the present invention, a fuel oxidizing catalyst for a fuel cell is prepared by adding a metal oxide including ZrO₂, CeO₂, MO, and CuO to a solution including a platinum-based metal precursor.

When the oxidizing catalyst is prepared, the oxidizing catalyst can be additionally calcinated after it is formed.

The oxidizing catalyst may be calcinated at a temperature ranging from 650 to 750°C (or from about 650 to about 750°C). In one embodiment, when the temperature is lower than 650°C, the calcination may not be complete. By contrast, in another embodiment, when the calcination is higher than 750°C, the oxidizing catalyst may have a damaged porous structure.

The calcination of an oxidizing catalyst may be performed for a period ranging from 0.5 to 2 hours (or from about 0.5 to about 2 hours). In one embodiment, when the calcination is performed for less than 0.5 hours, the calcination may not be complete. By contrast, in another embodiment, when the calcination is performed for more than 2 hours, the calcination may already be completely formed prior to the end of this period, thereby wasting cost and time.

In addition, an embodiment of the present invention provides a reformer of a fuel cell system including a heating source for generating heat through an oxidizing catalyst reaction of a fuel and an oxidant, and a reforming reaction part for generating hydrogen gas from a fuel through a reforming catalyst reaction.

The heating source may include a fuel oxidizing catalyst of the first, second, third, or fourth embodiments of the present invention.

One embodiment of the present invention provides a fuel cell system including the reformer, at least one electricity generating element that generates electrical energy through an electrochemical reaction of hydrogen gas and an oxidant, a fuel supplier that supplies the fuel to the reformer and the electricity generating element, and an oxidant supplier that supplies the oxidant to the reformer and the electricity generating element.

An embodiment of the present invention will hereinafter be described in more detail with reference to the accompanying drawings. However, the present invention may have various modifications and equivalent arrangements, and it is to be understood that the invention is not limited to the described embodiments.

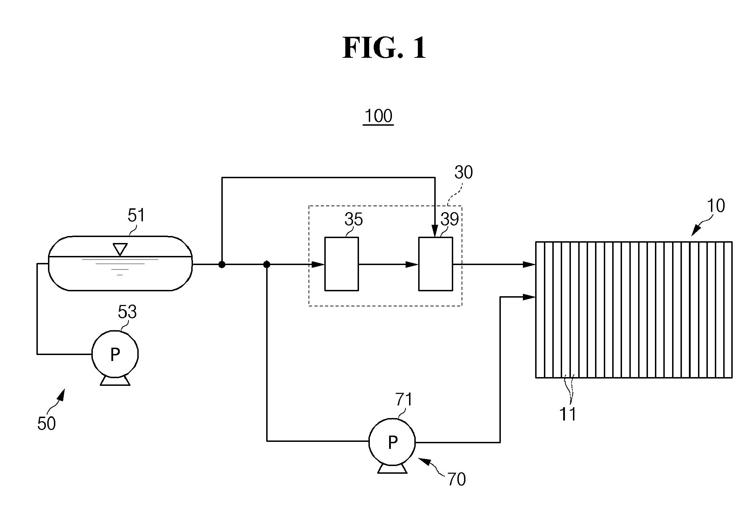

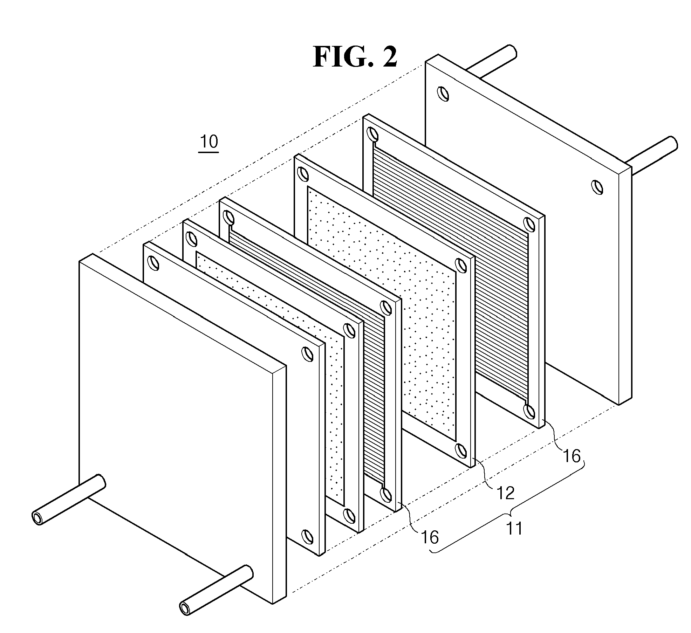

FIGURE 1 is a schematic view showing the whole structure of a fuel cell system according to one embodiment of the present invention, and FIGURE 2 is an exploded perspective schematic view showing a stack structure illustrated in FIGURE 1.

Referring to the drawings, the fuel cell system 100 is a polymer electrolyte membrane fuel cell (PEMFC) system, where a hydrogen-containing fuel is reformed to generate hydrogen, and then electrical energy is generated by electrochemical reactions of the hydrogen and an oxidant.

In the fuel cell system 100, the oxidant includes a gas that reacts with hydrogen, for example oxygen or air containing oxygen, which is stored in a separate storing space.

The fuel cell system 100 includes an electricity generating element 11 that generates electrical energy through electrochemical reactions of a reformed gas supplied from a reformer 30 and an oxidant, a fuel supplier 50 for supplying a fuel to the reformer 30, which generates hydrogen from a fuel and supplies the hydrogen to the electricity generating element 11, and an oxidant supplier 70 for supplying an oxidant to the reformer 30. Electricity generating elements 11 are stacked to form a stack 10.

Here, the fuel cell system 100 can be a power source for supplying an electrical energy (or predetermined electrical energy) to any suitable load, such as a portable electronic device (e.g., a laptop computer, a PDA, etc.) or a mobile telecommunication device.

The reformer 30 generates hydrogen from the hydrogen-containing fuel by a reforming catalyst reaction, and supplies the generated hydrogen (or hydrogen-rich gas) to the stack 10. The reformer 30 is connected with the stack 10 and the fuel supplier 50 via a pipe line, etc.

The reformer 30 includes a heating source 35 that generates a heating energy (or predetermined heating energy) required for the reforming reaction of a fuel by the oxidation catalyst reaction between the fuel and the oxidant respectively supplied from the fuel supplier 50 and the oxidant supplier 70, and a reforming reaction part 39 that absorbs the heating energy generated from the heating source 35 to generate hydrogen from the fuel via the reforming catalyst reaction of fuel supplied from the fuel supplier 50. In one embodiment, the reformer optionally also includes a carbon monoxide reducing part where carbon monoxide is reduced or oxidized.

The heating source 35 and the reforming reaction part 39 of the reformer 30 may be independently equipped and connected to each other via a common connection element. Alternatively, they may be incorporated in a double pipeline structure where the heating source 35 is disposed inside the reforming reaction part 39, and the reforming reaction part 39 is disposed outside the heating source 35.

The heating source 35 includes a reactor body, and a fuel oxidizing catalyst in the reactor body. The reactor body can be made in various shapes. According to one embodiment, a container-type reactor body has a suitable (or predetermined) inside space.

The fuel oxidizing catalyst includes a metal oxide including CeO₂, MO (wherein M is a transition element), and CuO, and may further include a platinum-based metal. In one embodiment, the metal oxide may further include ZrO₂.

The reforming reaction part 39 includes a reactor body, and a reforming catalyst in the reactor body. The reactor body can also be made in various suitable shapes. According to one embodiment, a container-type reactor body has a suitable (or predetermined) inside space.

The reforming catalyst promotes a reforming reaction of a fuel by absorbing heat from the heating source 35, and includes at least one catalyst selected from the group consisting of nickel (Ni), platinum (Pt), ruthenium (Ru), silver (Ag), palladium (Pd), copper (Cu), zinc (Zn), a copper-zinc alloy (Cu-Zn) and combinations thereof that is supported on a carrier selected from the group consisting of alumina (Al₂O₃), silica (SiO₂), titania (TiO₂), and combinations thereof having, for example, a pellet shape.

When the reactor body is composed of a reaction substrate, the reforming catalyst is in the channel of the reaction substrate. Alternatively, when the reactor body is composed of a container, a pellet or honey-comb type of reforming catalyst is filled inside the reactor body.

The fuel supplier 50 for supplying the fuel to the reformer 30 includes a fuel tank 51 containing the fuel to be supplied to the reformer 30 and a fuel pump 53 connected with the fuel tank 51 for supplying the fuel from the fuel tank 51. The fuel tank 51 is connected with the heating source 35 of the reformer 30 and the reforming reaction part 39 via pipe lines.

The oxidant supplier 70 includes an air pump 71 that draws an oxidant with a certain (or predetermined) pumping force and supplies the oxidant to the electricity generating elements 11 of the stack 10 and to the heating source 35. As shown in FIGURE 1, the oxidant supplier 70 is illustrated to supply the oxidant to the stack 10 and the heating source 35 via a single air pump 71, but it is not limited thereto. It may include a pair of oxidant pumps mounted to the stack 10 and the heating source 35, respectively.

Upon driving the system 100 according to one embodiment of the present invention, hydrogen generated from the reformer 30 is supplied to the electricity generating elements 11, the oxidant is supplied to the electricity generating elements 11, and the electrochemical reaction occurs by the oxidation reaction of the hydrogen and the reduction reaction of the oxidant to generate electrical energy of a certain (or predetermined) power output as well as water and heat.

Furthermore, the fuel cell system 100 may include a common control unit mounted separately that substantially controls the overall operation of the system, for example operations of the fuel supplier 50 and the oxidant supplier 70.

As shown in FIGURE 2, the stack 10 includes stacked electricity generating elements 11. Each electricity generating element 11 includes a membrane-electrode assembly (MEA) 12 and separators (or bipolar plates) 16 disposed at respective sides of the MEA 12 to constitute a cell unit of a fuel cell.

The MEA 12 includes an anode and a cathode respectively having active areas where electrochemical reactions of hydrogen and an oxidant occur, and an electrolyte membrane interposed between the anode and the cathode.

At the anode, hydrogen is oxidized to produce protons and electrons, and at the cathode, the protons react with an oxidant to generate heat and moisture. The electrolyte membrane functions as an ion exchanger for transferring protons generated at the anode to the cathode. The separator 16 supplies a fuel and an oxidant to the MEA 12, and also works as a conductor for serially coupling the anode and the cathode in the MEA 12.

Here, the stack 10 may be provided as a stack of a general polymer electrolyte type fuel cell.

The following examples illustrate the present invention in more detail. However, the present invention is not limited by these examples.

### Experimental Example 1: Preparation of a Fuel Oxidizing Catalyst Including a Metal Oxide

### Example 1

0.307g of Cu(NO₃)₂ ·3H₂O was dissolved in 6ml of water to prepare a Cu aqueous solution. Next, 5.050g of Ce(NO₃)₃ ·6H₂O and 2.062g of Fe(NO₃)₃ ·6H₂O were dissolved in the Cu aqueous solution to prepare a mixed solution. Then, 7.5g of Al₂O₃ was added to the mixed solution. The Al₂O₃ had an average particle diameter of 3mm. The mixed solution including Al₂O₃ was stirred for 30 minutes to impregnate the solution into the Al₂O₃. The impregnated Al₂O₃ was heated to 120°C for 2 hours to prepare a fuel oxidizing catalyst. The prepared fuel oxidizing catalyst was calcinated at 500°C for 1 hour.

The prepared fuel oxidizing catalyst included 20 parts by weight of CeO₂, 4 parts by weight of Fe₂O₃, 1 part by weight of CuO, and 75 parts by weight of Al₂O₃.

### Example 2

A fuel oxidizing catalyst was prepared according to the same method as in Example 1, except that the amounts of the precursors were adjusted so that the fuel oxidizing catalyst included 10 parts by weight of CeO₂, 4 parts by weight of Fe₂O₃, 1 part by weight of CuO, and 85 parts by weight of Al₂O₃.

### Example 3

A fuel oxidizing catalyst was prepared according to the same method as in Example 1, except that the amounts of the precursors were adjusted so that the fuel oxidizing catalyst included 30 parts by weight of CeO₂, 4 parts by weight of Fe₂O₃, 1 part by weight of CuO, and 65 parts by weight of Al₂O₃.

### Example 4

A fuel oxidizing catalyst was prepared according to the same method as in Example 1, except that the amounts of the precursors were adjusted so that the fuel oxidizing catalyst included 20 parts by weight of CeO₂, 0.1 parts by weight of Fe₂O₃, 1 part by weight of CuO, and 78.9 parts by weight of Al₂O₃.

### Example 5

A fuel oxidizing catalyst was prepared according to the same method as in Example 1, except that the amounts of the precursors were adjusted so that the fuel oxidizing catalyst included 20 parts by weight of CeO₂, 2 parts by weight of Fe₂O₃, 1 part by weight of CuO, and 77 parts by weight of Al₂O₃.

### Example 6

A fuel oxidizing catalyst was prepared according to the same method as in Example 1, except that the amounts of the precursors were adjusted so that the fuel oxidizing catalyst included 20 parts by weight of CeO₂, 5 parts by weight of Fe₂O₃, 1 part by weight of CuO, and 74 parts by weight of Al₂O₃.

### Example 7

A fuel oxidizing catalyst was prepared according to the same method as in Example 1, except that the amounts of the precursors were adjusted so that the fuel oxidizing catalyst included 20 parts by weight of CeO₂, 4 parts by weight of Fe₂O₃, 5 parts by weight of CuO and 71 parts by weight of Al₂O₃.

### Example 8

A fuel oxidizing catalyst was prepared according to the same method as in Example 1, except that the amounts of the precursors were adjusted so that the fuel oxidizing catalyst included 20 parts by weight of CeO₂, 4 parts by weight of Fe₂O₃, 10 parts by weight of CuO, and 66 parts by weight of Al₂O₃.

### Example 9

A fuel oxidizing catalyst was prepared according to the same method as in Example 1, except that Ni(NO₃)₂ ·6H₂O was used instead of Fe(NO₃)₃ ·6H₂O, and the amounts of the precursors were adjusted so that the fuel oxidizing catalyst included 20 parts by weight of CeO₂, 4 parts by weight of NiO, 1 part by weight of CuO, and 75 parts by weight of Al₂O₃.

### Example 10

A fuel oxidizing catalyst was prepared according to the same method as in Example 1, except that Co(NO₃)₂ ·H₂O was used instead of Fe(NO₃)₃ ·6H₂O, and the amounts of the precursors were adjusted so that the fuel oxidizing catalyst included 20 parts by weight of CeO₂, 4 parts by weight of Co₃O₄, 1 part by weight of CuO, and 75 parts by weight of Al₂O₃.

### Comparative Examples 1 to 9

Catalysts that are described in the treatise by Liotta (Co3O4/CeO2 composite oxides for methane emissions abatement: Relationship between Co3O4-CeO2 interaction and catalytic activity, Applied Catalysis B: Environmental, Volume 66, Issues 3-4, 20 July 2006, Pages 217-227, by L. F. Liotta), which is incorporated herein by reference in its entirety, were used in Comparative Examples 1 to 9.

CO₃O₄ was used in Comparative Example 1, and CO₃O₄ that was subjected to heat treatment at 400 °C for 4 hours was used in Comparative Example 2. A CO₃O₄ and CeO₂ catalyst (hereinafter represented by Co₃O₄/CeO₂) was used in Comparative Examples 3 to 7, where CO₃O₄ was respectively included in an amount of 5, 15, 30, 50, and 70wt% based on the total weight of the catalyst. A Co₃O₄/CeO₂including catalyst including 30wt% of CO₃O₄ based on the total weight of the catalyst and that was subjected to heat treatment at 400 °C for 4 hours was used in Comparative Example 8. CeO₂ was used in Comparative Example 9.

### Fabrication of a Heating Source Including the Fuel Oxidizing Catalyst of Experimental Example 1 and Measurement of Its Performance

8ml of the fuel oxidizing catalyst prepared according to Examples 1 to 10 were charged into a stainless steel cylindrical reactor (GMS 1000^{®}, Sunyoung Sys-Tech Co.). Air was supplied at a speed of 21/min to the fuel oxidizing catalyst charged reactor, which was then heated to 500°C. Then, the reactor was cooled to 340°C, and a fuel and air were supplied to observe whether a fuel catalytic reaction by the fuel oxidizing catalysts started at the temperature. For the fuel, 35 volume% of iso-butane, 50 volume% of n-butane, and 15 volume% of C₃H₈ were used; the fuel was supplied at 279.1 ml/min; and air was supplied at 2000ml/min.

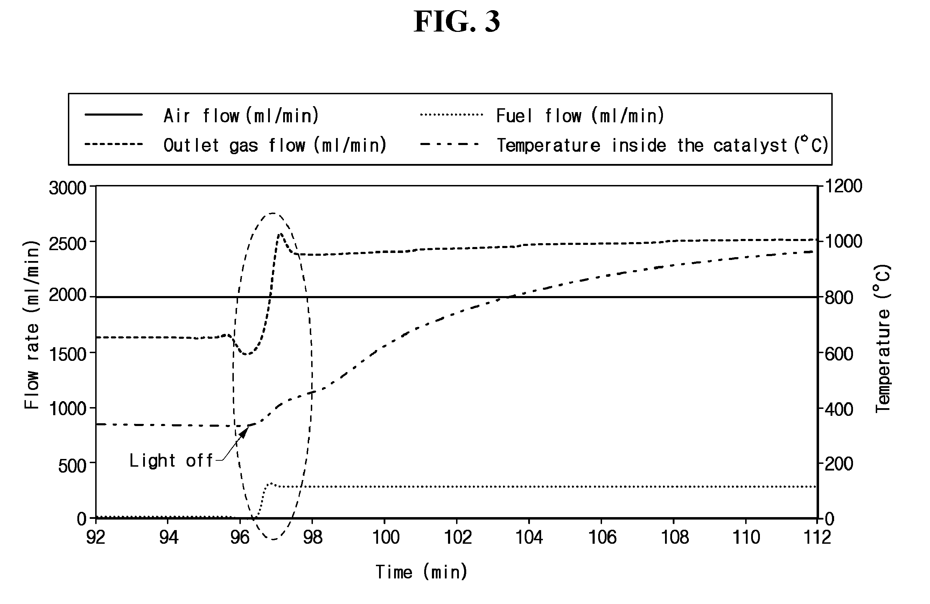

FIGURE 3 shows interior temperature changes of a reactor using the fuel oxidizing catalyst according to Example 1. Referring to FIGURE 3, the oxidizing catalyst reaction of a fuel was started at 340°C.

A reactor using a fuel oxidizing catalyst according to Examples 2 to 10 showed similar temperature changes to the interior temperature change of the reactor using a fuel oxidizing catalyst according to Example 1. 50mg of the fuel oxidizing catalysts according to Comparative Examples 1 to 9 were respectively charged into a U-shaped reactor. A mixed fuel including 0.3 volume% of CH₄ and 0.6 volume% of O₂ was supplied at 50ml/min to the reactor, and the starting temperature of the fuel oxidizing catalyst reaction was measured.

The following Table 1 provides the fuel oxidation reaction starting temperature of a reactor including a fuel oxidizing catalyst according to Example 1 and the kinds of fuel oxidizing catalysts and their reaction starting temperatures of the fuel oxidizing catalysts according to Comparative Examples 1 to 9.

**Table 1**

| | Catalyst | Reaction Starting Temperature of Fuel Oxidizing Catalyst (°C) |
|---|---|---|
| Example 1 | CeO₂/Fe₂O₃/ CuO /Al₂O₃ | 340 |
| Comparative Example 1 | Co₃O₄ | 473 |
| Comparative Example 2 | Co₃O₄ | 373 |
| Comparative Example 3 | CO₃O₄/CeO₂ (5 wt% CO₃O₄) | 650 |
| Comparative Example 4 | Co₃O₄/CeO₂ (15 wt% CO₃O₄) | 633 |
| Comparative Example 5 | Co₃O_{4/}CeO₂ (30 wt% CO₃O₄) | 471 |
| Comparative Example 6 | Co₃O₄/CeO₂ (50 wt% CO₃O₄) | 529 |
| Comparative Example 7 | Co₃O₄/CeO₂ (70 wt% CO₃O₄) | 533 |
| Comparative Example 8 | Co₃O₄/CeO₂ (30 wt% CO₃O₄) | 518 |
| Comparative Example 9 | CeO₂ | 723 |

Referring to Table 1, the fuel oxidizing catalyst according to Example 1 turned out to have a lower reaction starting temperature than that of the fuel oxidizing catalysts according to Comparative Examples 1 to 9.

### Experimental Example 2: Fabrication of a Fuel Oxidizing Catalyst Including a Metal Oxide and a Platinum-Based Metal

### Example 11

10.60g of Ce(NO₃)₃ ·6H₂O and 0.0778g of Ni(NO₃)₂ ·6H₂O were dissolved in 7.4ml of a Cu aqueous solution to prepare a mixed solution. Herein, the Cu aqueous solution was prepared by dissolving 162.34g of Cu(NO₃)₂ ·3H₂O in 500ml of water. Next, 14.84g of Al₂O₃ was added to the mixed solution. The resulting mixed solution including Al₂O₃ was stirred and heated to 100°C to evaporate water, gaining 190.068g of a metal oxide. The metal oxide was calcinated at 500°C for 1 hour.

By contrast, 3g of H₂PtCl₆ ·H₂O was dissolved in 10ml of water to prepare a solution including a platinum-based metal precursor. 190.068g of the prepared metal oxide was added to 1.589ml of the solution including the platinum-based metal precursor. The resulting solution was heated to 150°C for 30 minutes and then cooled, preparing an oxidizing catalyst. The oxidizing catalyst was calcinated at 650°C for 1.5 hours. The oxidizing catalyst included 1 part by weight of Pt, 0.1 parts by weight of NiO, 4 parts by weight of CuO, 21 parts by weight of CeO₂, and 73.9 parts by weight of Al₂O₃.

### Example 12

An oxidizing catalyst was prepared according to the same method as in Example 11, except for including 0.1 parts by weight of Pt, 0.1 parts by weight of NiO, 4 parts by weight of CuO, 21 parts by weight of CeO₂, and 73.9 parts by weight of Al₂O₃.

### Example 13

An oxidizing catalyst was prepared according to the same method as in Example 11, except for including 10 parts by weight of Pt, 0.1 parts by weight of NiO, 4 parts by weight of CuO, 21 parts by weight of CeO₂, and 73.9 parts by weight of Al₂O₃.

### Example 14

An oxidizing catalyst was prepared according to the same method as in Example 11, except for including 20 parts by weight of Pt, 0.1 parts by weight of NiO, 4 parts by weight of CuO, 21 parts by weight of CeO₂, and 73.9 parts by weight of Al₂O₃.

### Example 15

An oxidizing catalyst was prepared according to the same method as in Example 11, except for including 30 parts by weight of Pt, 0.1 parts by weight of NiO, 4 parts by weight of CuO, 21 parts by weight of CeO₂, and 73.9 parts by weight of Al₂O₃.

### Example 16

An oxidizing catalyst was prepared according to the same method as in Example 11, except for including 40 parts by weight of Pt, 0.1 parts by weight of NiO, 4 parts by weight of CuO, 21 parts by weight of CeO₂, and 73.9 parts by weight of Al₂O₃.

### Example 17

An oxidizing catalyst was prepared according to the same method as in Example 11, except for including 50 parts by weight of Pt, 0.1 parts by weight of NiO, 4 parts by weight of CuO, 21 parts by weight of CeO₂, and 73.9 parts by weight of Al₂O₃.

### Example 18

An oxidizing catalyst was prepared according to the same method as in Example 11, except for including 1 part by weight of Pt, 0.5 parts by weight of NiO, 4 parts by weight of CuO, 21 parts by weight of CeO₂, and 73.9 parts by weight of Al₂O₃.

### Example 19

An oxidizing catalyst was prepared according to the same method as in Example 11, except for including 1 part by weight of Pt, 1 parts by weight of NiO, 4 parts by weight of CuO, 21 parts by weight of CeO₂, and 73.9 parts by weight of Al₂O₃.

### Example 20

An oxidizing catalyst was prepared according to the same method as in Example 11, except for including 1 part by weight of Pt, 1.5 parts by weight of NiO, 4 parts by weight of CuO, 21 parts by weight of CeO₂, and 73.9 parts by weight of Al₂O₃.

### Example 21

An oxidizing catalyst was prepared according to the same method as in Example 11, except for including 1 part by weight of Pt, 2 parts by weight of NiO, 4 parts by weight of CuO, 21 parts by weight of CeO₂, and 73.9 parts by weight of Al₂O₃.

### Example 22

An oxidizing catalyst was prepared according to the same method as in Example 11, except for including 1 part by weight of Pt, 0.1 parts by weight of NiO, 1 part by weight of CuO, 21 parts by weight of CeO₂, and 73.9 parts by weight of Al₂O₃.

### Example 23

An oxidizing catalyst was prepared according to the same method as in Example 11, except for including 1 part by weight of Pt, 0.1 parts by weight of NiO, 10 parts by weight of CuO, 21 parts by weight of CeO₂, and 73.9 parts by weight of Al₂O₃.

### Example 24

An oxidizing catalyst was prepared according to the same method as in Example 11, except for including 1 part by weight of Pt, 0.1 parts by weight of NiO, 4 parts by weight of CuO, 10 parts by weight of CeO₂, and 73.9 parts by weight of Al₂O₃.

### Example 25

An oxidizing catalyst was prepared according to the same method as in Example 11, except for including 1 part by weight of Pt, 0.1 parts by weight of NiO, 4 parts by weight of CuO, 30 parts by weight of CeO₂, and 73.9 parts by weight of Al₂O₃.

### Fabrication of a Heating Source Including a Fuel Oxidizing Catalyst of Experimental Example 2 and Its Performance Evaluation

Pipe-shaped reactors were respectively charged with 9ml of the oxidizing catalysts prepared according to Examples 11 to 25. Next, each reactor was supplied with a fuel including 35 volume% of iso-butane, 50 volume% of normal-butane, and 15 volume% of C₃H₈ at a rate of 279.1 ml/min, and air at a rate of 2000ml/min.

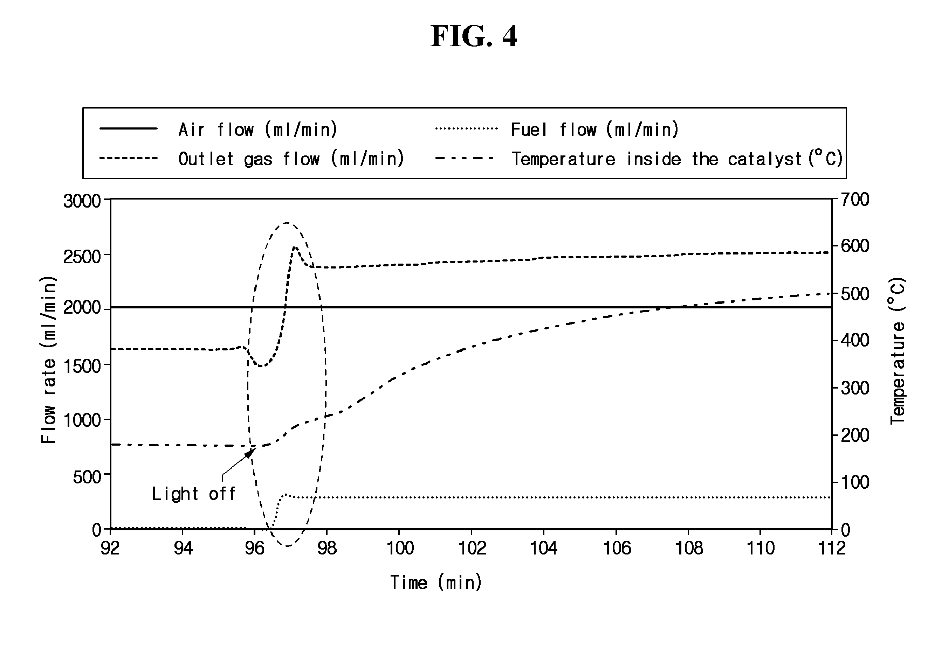

Then, each reactor was measured regarding its internal temperature change. The results are shown in FIGURE 4. Referring to FIGURE 4, the fuel oxidizing catalyst reaction started at 180°C. The reactors of Examples 12 to 25 had similar temperature changes to that of Example 11, and started a fuel oxidizing catalyst reaction at around 180°C.

### Comparative Examples 10 to 24

Comparative Examples 10 to 17 were prepared to include oxidizing catalysts described in Torncrona's treatise (Low temperature catalytic activity of cobalt oxide and ceria promoted Pt and Pd: -influence of pretreatment and gas composition, applied Catalysis B: Environmental, Volume 14, Issues 1-2, 5 December 1997, P. 131-145, A. Torncrona et al.), which is incorporated herein by reference in its entirety. The oxidizing catalysts are shown in Table 2. The fuel oxidizing catalyst reaction starting temperatures for Comparative Examples 10 to 17 were measured. The results are shown in Table 2.
Comparative Example 18 was prepared to include an oxidizing catalyst described in U.S. Patent No. 5345011, which is incorporated herein by reference in its entirety. The oxidizing catalyst is shown in Table 2. The fuel oxidizing catalyst reaction starting temperature for Comparative Example 18 was measured. The result is shown in Table 2.

Comparative Examples 19 to 22 were prepared to include an oxidizing catalyst described in U.S. Patent No. 5139994, which is incorporated herein by reference in its entirety. The oxidizing catalysts are shown in Table 2. The fuel oxidizing catalyst reaction starting temperatures for Comparative Examples 19 to 22 were measured. The results are shown in Table 2.

Comparative Example 23 was prepared to include an oxidizing catalyst described in U.S. Patent No. 6187709, which is incorporated herein by reference in its entirety. The oxidizing catalyst is shown in Table 2. The fuel oxidizing catalyst reaction starting temperature for Comparative Example 23 was measured. The result is shown in Table 2.

Comparative Example 24 was prepared to include an oxidizing catalyst disclosed in U.S. Patent No. 6086835, which is incorporated herein by reference in its entirety. The oxidizing catalyst is shown in Table 2. The fuel oxidizing catalyst reaction starting temperature for Comparative Example 24 was measured. The result is shown in Table 2.

**Table 2**

| | Oxidizing Catalyst | Fuel | Reaction Starting Temperature (°C) | |
|---|---|---|---|---|
| Comparative Example 10 | 1 wt% Pt/Al₂O₃ | propane | 300 | monolith carrier |
| Comparative Example 11 | 0.5 wt% Pd/Al₂O₃ | propane | 245 | monolith carrier |
| Comparative Example 12 | 1 wt% Pt/20 wt% CeO₂/Al₂O₃ | propane | 247 | monolith carrier |
| Comparative Example 13 | 0.5 wt% Pd /20 wt% CeO₂/Al₂O₃ | propane | 256 | monolith carrier |
| Comparative Example 14 | 1 wt% Pt/20 wt% Co₂O₃/Al₂O₃ | propane | 237 | monolith carrier |
| Comparative Example 15 | 0.5 wt% Pd /20 wt% Co₂O₃/Al₂O₃ | propane | 246 | monolith carrier |
| Comparative Example 16 | 20 wt% CeO₂/Al₂O₃ | propane | 237 | monolith carrier |
| Comparative Example 17 | 20 wt% Co₂O₃/Al₂O₃ | propane | 364 | monolith carrier |
| Comparative Example 18 | Catalyst including 13 wt% of Mn | methane | 200 to 450 | Space velocity: 200 to 2000h⁻¹ |
| Comparative Example 19 | platinum/alumina catalyst | propane | 262 | |
| Comparative Example 20 | TiO₂/Pt/Al₂O₃ | propane | 297 | |
| Comparative Example 21 | platinum/alumina catalyst | ethane | 523 | Fuel includes 20 volume% of SO₂ |
| Comparative Example 22 | TiO₂/Pt/Al₂O₃ | ethane | 500 | Fuel includes 20 volume% of SO₂ |
| Comparative Example 23 | Palladium-based catalyst | | 450 | |
| Comparative Example 24 | 0.5 wt% of gold, 9.5 wt% of cobalt, 80 wt% of zirconium oxide/cerium oxide, and 10 wt% titanium dioxide | | 300 | Space velocity: 60000h⁻¹ |

Referring to Table 2, Example 11 had a lower oxidizing catalyst reaction starting temperature than Comparative Examples 10 to 24.

### Experimental Example 3: Fabrication of a Fuel Oxidizing Catalyst Including a Metal Oxide Including ZrO₂ and a Platinum-Based Metal

### Example 26

2.46g of Zr(NO₃)₂ ·4H₂O, 2.78g of Ce(NO₃)₃ ·6H₂O, and 0.04g of Ni(NO₃)₂ ·6H₂O were dissolved in 9ml of an Cu aqueous solution (prepared by dissolving 1.23g of Cu(NO₃)₂ ·3H₂O in 9ml of water) to prepare a mixed solution. Next, 7.39g of Al₂O₃ was added to the mixed solution. The resulting mixed solution including Al₂O₃ was stirred and heated at 120°C for 2 hours to evaporate water to form a metal oxide.

3g of H₂PtCl₆ ·H₂O was dissolved in 10ml of water to prepare a solution including a platinum-based metal precursor. Then, the above metal oxide was added to 0.33ml of the solution including the platinum-based metal precursor. The resulting product was heated at 150°C for 30 minutes and then cooled to prepare an oxidizing catalyst. The oxidizing catalyst was calcinated at 650°C for 1.5 hours. The oxidizing catalyst included 1 part by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 27

An oxidizing catalyst was prepared according to the same method as in Example 26, except for including 10 parts by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 28

An oxidizing catalyst was prepared according to the same method as in Example 26, except for including 20 parts by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 29

An oxidizing catalyst was prepared according to the same method as in Example 26, except for including 30 parts by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 30

An oxidizing catalyst was prepared according to the same method as in Example 26, except for including 40 parts by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 31

An oxidizing catalyst was prepared according to the same method as in Example 26, except for including 50 parts by weight of Pt, 0.1 parts by weight of NiO, 4 parts by weight of CuO, 11 parts by weight of CeO₂, 10 parts by weight of ZrO₂, and 73.9 parts by weight of Al₂O₃.

### Example 32

An oxidizing catalyst was prepared according to the same method as in Example 26, except for including 1 part by weight of Pt, 1 part by weight of NiO, 4 parts by weight of CuO, 11 parts by weight of CeO₂, 10 parts by weight of ZrO₂, and 73.9 parts by weight of Al₂O₃.

### Example 33

An oxidizing catalyst was prepared according to the same method as in Example 26, except for including 1 part by weight of Pt, 2 parts by weight of NiO, 4 parts by weight of CuO, 11 parts by weight of CeO₂, 10 parts by weight of ZrO₂, and 73.9 parts by weight of Al₂O₃.

### Example 34

An oxidizing catalyst was prepared according to the same method as in Example 26, except for including 1 part by weight of Pt, 0.1 parts by weight of NiO, 1 part by weight of CuO, 11 parts by weight of CeO₂, 10 parts by weight of ZrO₂, and 73.9 parts by weight of Al₂O₃.

### Example 35

An oxidizing catalyst was prepared according to the same method as in Example 26, except for including 1 part by weight of Pt, 0.1 parts by weight of NiO, 10 parts by weight of CuO, 11 parts by weight of CeO₂, 10 parts by weight of ZrO₂, and 73.9 parts by weight of Al₂O₃.

### Example 36

An oxidizing catalyst was prepared according to the same method as in Example 26, except for including 1 part by weight of Pt, 0.1 parts by weight of NiO, 4 parts by weight of CuO, 5 parts by weight of CeO₂, 10 parts by weight of ZrO₂, and 73.9 parts by weight of Al₂O₃.

### Example 37

An oxidizing catalyst was prepared according to the same method as in Example 26, except for including 1 part by weight of Pt, 0.1 parts by weight of NiO, 4 parts by weight of CuO, 15 parts by weight of CeO₂, 10 parts by weight of ZrO₂, and 73.9 parts by weight of Al₂O₃.

### Example 38

An oxidizing catalyst was prepared according to the same method as in Example 26, except for including 1 part by weight of Pt, 0.1 parts by weight of NiO, 4 parts by weight of CuO, 20 parts by weight of CeO₂, 10 parts by weight of ZrO₂, and 73.9 parts by weight of Al₂O₃.

### Example 39

An oxidizing catalyst was prepared according to the same method as in Example 26, except for including 1 part by weight of Pt, 0.1 parts by weight of NiO, 4 parts by weight of CuO, 11 parts by weight of CeO₂, 5 parts by weight of ZrO₂, and 73.9 parts by weight of Al₂O₃.

### Example 40

An oxidizing catalyst was prepared according to the same method as in Example 26, except for including 1 part by weight of Pt, 0.1 parts by weight of NiO, 4 parts by weight of CuO, 11 parts by weight of CeO₂, 15 parts by weight of ZrO₂, and 73.9 parts by weight of Al₂O₃.

### Example 41

An oxidizing catalyst was prepared according to the same method as in Example 26, except for including 1 part by weight of Pt, 0.1 parts by weight of NiO, 4 parts by weight of CuO, 11 parts by weight of CeO₂, 20 parts by weight of ZrO₂, and 73.9 parts by weight of Al₂O₃.

### Fabrication of a Heating Source Including a Fuel Oxidizing Catalyst of Experimental Example and Evaluation of Its Performance

Pipe-shaped reactors were respectively charged with 8ml of the oxidizing catalysts according to Examples 26 to 41. Next, each reactor was supplied with a fuel including 35 volume% of iso-butane, 50 volume% of normal-butane, and 15 volume% of C₃H₈ at a rate of 279.1 ml/min, and air at a rate of 8300ml/min.

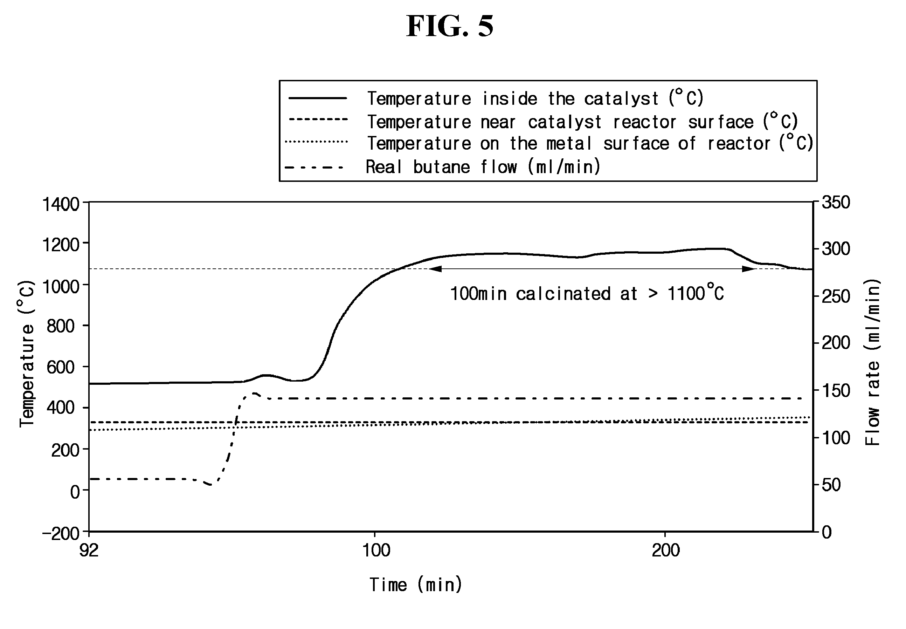

The prepared fuel oxidizing catalysts were measured regarding high temperature stability of a catalyst. The result of the reactor including the fuel oxidizing catalyst of Example 26 is provided in FIGURE 5. Referring to FIGURE 5, the fuel oxidizing catalyst of Example 26 is shown to maintain catalytic activity, even when it was kept at a temperature of more than 1100°C for 100 minutes.

The fuel oxidizing catalysts of Examples 27 to 41 also maintained catalytic activity even when they were kept at a temperature of more than 1100°C for 100 minutes.

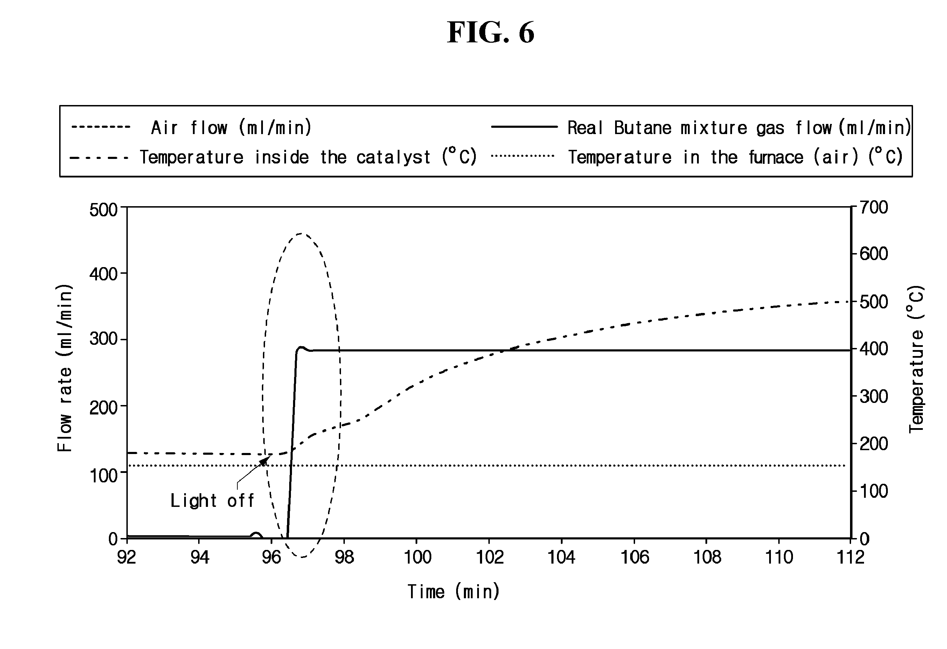

The reactor including a fuel oxidizing catalyst of Example 26 was measured regarding internal temperature change. The result is shown in FIGURE 6. Referring to FIGURE 6, a fuel oxidizing catalyst reaction started at about 130°C.

The fuel oxidizing catalysts of Examples 27 to 41 also started a fuel oxidizing catalyst reaction at about 130°C.

In view of the foregoing, a fuel oxidizing catalyst of a fuel cell system according to the present invention has improved oxidant storage capability and improved oxidizing catalytic activity between a fuel and an oxidant, thereby improving heat efficiency of the fuel cell system and resulting in rapid operation of the fuel cell system.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A fuel oxidizing catalyst for a fuel cell comprising:
a metal oxide including CeO₂, MO, and CuO,
wherein M is a transition metal.

2. The fuel oxidizing catalyst of claim 1, wherein M is selected from the group consisting of Ni, Co, Fe, and combinations thereof.

3. The fuel oxidizing catalyst of claim 2, wherein M is Fe.

4. The fuel oxidizing catalyst of claims 1, 2 or 3, wherein the fuel oxidizing catalyst comprises 10 to 30 parts by weight CeO₂, 0.1 to 5 parts by weight MO, and 1 to 10 parts by weight CuO.

5. The fuel oxidizing catalyst of claims 1, 2 or 3, wherein the metal oxide further comprises ZrO₂.

6. The fuel oxidizing catalyst of claim 5, wherein the fuel oxidizing catalyst comprises 5 to 20 parts by weight ZrO₂, 5 to 20 parts by weight CeO₂, 0.1 to 5 parts by weight MO, and 1 to 10 parts by weight CuO.

7. The fuel oxidizing catalyst of any one of the preceding claims, wherein the metal oxide is supported on a carrier selected from the group consisting of Al₂O₃, TiO₂, SiO₂, cordierite, and combinations thereof.

8. The fuel oxidizing catalyst of any one claims 1 to 5 or 7, further comprising a platinum-based metal.

9. The fuel oxidizing catalyst of claim 8, wherein the platinum-based metal is selected from the group consisting of Pt, Pd, Ru, Rh, and combinations thereof.

10. The fuel oxidizing catalyst of claims 8 or 9, wherein the fuel oxidizing catalyst comprises 0.1 to 50 parts by weight of the platinum-based metal, 10 to 30 parts by weight CeO₂, 0.1 to 2 parts by weight MO, and 1 to 10 parts by weight CuO.

11. The fuel oxidizing catalyst of claims 8 or 9, wherein the metal oxide further comprises ZrO₂.

12. The fuel oxidizing catalyst of claim 11, wherein the fuel oxidizing catalyst comprises 0.1 to 50 parts by weight of the platinum-based metal, 5 to 20 parts by weight ZrO₂, 5 to 20 parts by weight CeO₂, 0.1 to 2 parts by weight MO, and 1 to 10 parts by weight CuO.

13. A method of preparing a fuel oxidizing catalyst for a fuel cell, the method comprising:
dissolving a Ce precursor and an M precursor in a Cu-containing solution; and
heating the precursor-containing solution,
wherein M is a transition metal.

14. The method of claim 13, wherein the Ce precursor is selected from the group consisting of cesium nitrate, ammonium cesium nitrate, cesium acetate, cesium chloride, hydrates thereof, and combinations thereof.

15. The method of claims 13 or 14, wherein the M precursor is selected from the group consisting of M nitrate, M acetate, M chloride, hydrates thereof, and combinations thereof.

16. The method of claims 13, 14 or 15, further comprising:
dissolving a Cu precursor in a solvent to prepare the Cu-containing solution.

17. The method of claim 16, wherein the Cu precursor is selected from the group consisting of copper nitrate, copper acetate, hydrates thereof, and mixtures thereof.

18. The method of claims 16 or 17, wherein the solvent for dissolving the Cu precursor is selected from the group consisting of water, methanol, ethanol, and combinations thereof.

19. The method of any one of claims 13 to 18, further comprising:
adding a Zr precursor to the Cu-containing solution.

20. The method of claim 19, wherein the Zr precursor is selected from the group consisting of zirconium nitrate, ammonium zirconium nitrate, zirconium acetate, zirconium chloride, hydrates thereof, and combinations thereof.

21. The method of any one of claims 13 to 20, further comprising:
adding a carrier to the Cu-containing solution.

22. The method of claim 21, wherein the carrier is selected from the group consisting of Al₂O₃, TiO₂, SiO₂, cordierite, and combinations thereof.

23. The method of any one of claims 13 to 22, which comprises:
heating the precursor-containing solution at a temperature ranging from 100 to 200°C.

24. The method of any one of claims 13 to 23, which comprises:
heating the precursor-containing solution for a period ranging from 1 to 3 hours.

25. The method of any one of claims 13 to 24, further comprising:
calcinating the metal oxide.

26. The method of claim 25, wherein the metal oxide is calcinated at a temperature ranging from 450 to 550°C.

27. The method of claims 25 or 26 wherein the metal oxide is calcinated for a period ranging from 1 to 3 hours.

28. The method of any one of claims 13 to 27 further comprising:
adding a metal oxide to a solution including a platinum-based metal precursor; and
heating the metal oxide -containing solution.

29. The method of claim 28, wherein the platinum-based metal precursor is selected from the group consisting of H₂PtCl₆, Pt(C₅H₇O₂)₂, H₆Cl₂N₂Pt, PtCl₂, PtBr₂, PdCl₂, Pd(C₂H₃O₂)₂, Pd(C₅H₇O₂)₂, RuCl₃, Ru(C₅H₇O₂)₃, (NH₄)₂RuCl₆, (NH₄)₃RhCl₆, [Rh(CH₃COO)₂]₂, Rh(H₂O)(NO₃)₃, hydrates thereof, and combinations thereof.

30. The method of claims 28 or 29 wherein the solution including the platinum-based metal precursor is prepared by dissolving the platinum-based metal precursor in a solvent selected from the group consisting of water, N,N-dimethylformamide, methanol, and combinations thereof.

31. The method of claims 28, 29 or 30 wherein the metal oxide -containing solution is heated at a temperature ranging from 100 to 200°C.

32. The method of any one of claims 28, 29, 39 or 31 wherein the metal oxide - containing solution is heated for a period ranging from 15 minutes to 45 minutes.

33. The method of any one of claims 13 to 32, further comprising:
calcinating the oxidizing catalyst.

34. The method of claim 33, wherein the oxidizing catalyst is calcinated at a temperature ranging from about 650 to about 750°C.

35. The method of claims 33 or 34 wherein the oxidizing catalyst is calcinated for a period ranging from 0.5 to 2 hours.

36. A reformer for a fuel cell comprising:
a heating source for generating heat through an oxidizing catalyst reaction of a fuel and an oxidant; and
a reforming reaction part for generating a hydrogen-rich gas through a reforming catalyst reaction,
wherein the reformer includes a fuel oxidizing catalyst as claimed in any one of claims 1 to 12.

37. A fuel cell system comprising:
a reformer comprising:
a heating source for generating heat through an oxidizing catalyst reaction of a fuel and an oxidant, and
a reforming reaction part for generating a hydrogen-rich gas through a reforming catalyst reaction,
wherein the reformer includes a fuel oxidizing catalyst as claimed in any one of claims 1 to 12;
at least one electricity generating element for generating electrical energy through an electrochemical reaction of hydrogen gas and an oxidant;
a fuel supplier for supplying the fuel to the reformer and the electricity generating element; and
an oxidant supplier for supplying the oxidant to the reformer and the electricity generating element.

38. Use of a fuel cell catalyst as claimed in any one of claims 1 to 12 in a reformer or a fuel cell system.
